# EUROPÄISCHE PATENTSCHRIFT

(11) **EP 1 509 691 B1**
(45) Veröffentlichungstag und Bekanntmachung des Hinweises auf die Patenterteilung: **29.07.2009**
(21) Anmeldenummer: 03729986.4
(22) Anmeldetag: 07.05.2003
(51) Int. Cl.: F02M 25/00, F01N 3/023, F01N 9/00, F02D 19/12

(54) **VERFAHREN ZUM BETREIBEN EINES DIESELMOTORS**
METHOD FOR OPERATING A DIESEL ENGINE
PROCEDE PERMETTANT DE FAIRE FONCTIONNER UN MOTEUR DIESEL

(30) Priorität: 23.05.2002 DE 10222762
(43) Veröffentlichungstag der Anmeldung: 02.03.2005
(73) Patentinhaber: Volkswagen Aktiengesellschaft, 38436 Wolfsburg (DE)
(72) Erfinder: DÜSTERDIEK, Thorsten, 30163 Hannover (DE); RUHNKE, Andreas, 30163 Hannover (DE); HERTLE, Viktor, 38471 Rühen (DE); DORE, Pascal, 36041 Fulda (DE); KAHMANN, Gerhard, 38302 Wolfenbüttel (DE)
(74) Vertreter: Kandlbinder, Markus Christian
(86) Internationale Anmeldenummer: PCT/EP2003/004785
(87) Internationale Veröffentlichungsnummer: WO 2003/100244

(56) Entgegenhaltungen:
- EP-A- 0 488 831
- EP-A- 1 026 380
- DE-A- 3 230 608
- DE-A- 3 420 199
- DE-A- 3 715 388
- DE-A- 4 100 780
- FR-A- 2 668 203
- FR-A- 2 799 504
- US-A1- 2001 052 232
- SEGUELONG T: "EOLYS ALS ADDITIV ZUR DIESELPARTIKELFILTER-REGENERATION" MTZ MOTORTECHNISCHE ZEITSCHRIFT, FRANCKH'SCHE VERLAGSHANDLUNG,ABTEILUNG TECHNIK. STUTTGART, DE, Bd. 63, Nr. 11, November 2002 (2002-11), Seiten 956-958, XP001130294 ISSN: 0024-8525

## Beschreibung

Die Erfindung betrifft ein Verfahren zum Betreiben eines Dieselmotors, gemäß dem Oberbegriff des Anspruchs 1.

Die Abgase von Dieselmotoren enthalten sowohl gasförmige Schadstoffe, wie beispielsweise Kohlenwasserstoffe (HC), Stickoxyde (NOx) und Kohlenmonoxid (CO), als auch feststofförmige Schadstoffe, die in der Hauptsache Rußpartikel umfassen. Der Ausstoß von Rußpartikeln soll jedoch soweit wie möglich reduziert bzw. vollständig eliminiert werden. Hierzu ist eine Nachbehandlung des Abgases in einer Abgasnachbehandlungsanlage des Dieselmotors mit einem Partikelfilter notwendig. Ein derartiger Filter wird in die Abgasanlage des Motors eingebaut und enthält Filterelemente aus porösem Keramikmaterial, die von dem Rußpartikel enthaltenen Abgas durchströmt werden. Die Filterelemente halten dabei die in dem Abgas enthaltenen Rußpartikel zurück. Im Verlauf des Motorbetriebs füllen sich diese Filterelemente mit Rußpartikeln, so daß sie schließlich verstopfen. Diese Verstopfung wird dadurch gelöst, daß die auf den Filterelementen angesammelten Rußpartikeln beim Betrieb des Motors verbrannt werden, was als Regenerierung bezeichnet wird. In Anwesenheit von Sauerstoff verbrennen diese Rußpartikel bei Temperaturen in der Größenordnung von 550°C bis 600°C. Derartige Wärmegrade werden jedoch von Abgasen eines Dieselkraftfahrzeuges selten erreicht. Es ist daher notwendig, den Beginn der Regenerierung der Filterelemente dadurch zu beschleunigen, daß dem Dieselkraftstoff ein Zusatz bzw. Additiv zugegeben wird, welcher bzw. welches die Temperatur absenkt, bei der die Rußpartikel verbrennen. Die am häufigsten verwendeten Zusätze sind organisch-metallische Verbindungen, die in bestimmten Anteilen dem Dieselkraftstoff beigemischt und durch die Einspritzpumpe in eine Verbrennungskammer und somit ins Abgas gelangen. Derartige Zusätze bzw. Additive in enger Vermischung mit den Rußpartikeln wirken als Katalysator für die Verbrennung der Rußpartikel und senken die Entzündungstemperatur der Rußpartikel auf einen Wert von ca. 400°C bis 450°C ab.

Zum Erzielen der gewünschten Wirkung muß das Additiv gleichmäßig mit dem Dieselkraftstoff vermischt werden. Zusätzlich ist die erforderliche Konzentration des Additivs im Dieselkraftstoff je nach Motor und Auslegung der Abgasnachbehandlungsanlage unterschiedlich, so daß die Additivierung nicht bereits beim Hersteller des Dieselkraftstoffes erfolgen kann. Dazu ist aus der FR 2 668 203 ein Verfahren und eine Vorrichtung zur automatischen Zuführung eines Zusatzes in den Kraftstofftank eines Kraftfahrzeuges mit Dieselmotor bekannt. Hierbei wird die bei jedem Tankvorgang eingefüllte Kraftstoffmenge gemessen, die Menge an Additiv entsprechend der getankten Kraftstoffmenge bestimmt und dem Kraftstofftank des Fahrzeugs automatisch zugeführt. Hierbei ist es jedoch nachteilig, daß die Konzentration des Additives im Dieselkraftstoff immer auf einem konstanten Wert gehalten wird. Hierdurch kommt es zu einer starken Veraschung des Partikelfilters durch anorganische Rückstände des Additives und zu einem hohen Additivverbrauch.

Aus der EP 0 488 831 B1 ist es bekannt, die automatisch zudosierte Menge des Additivs in Abhängigkeit von einer Last des Motors festzulegen, wobei zwischen den Betriebsbereichen Ortsfahrt, Landstraßenfahrt und Autobahnfahrt unterschieden wird.

Aus der DE 41 00 780 A1 ist ein Verfahren zum Reinigen eines Rußfilters im Abgassystem eines Dieselmotors durch diskontinuierliche Zugabe von ein Abbrennen im Rußfilter angesammelten Russes auslösenden mit den Brenngasen in das Rußfilter eintretenden Additiven bekannt. Hierbei wird das Additiv zeitlich begrenzt zugegeben, wenn eine bestimmte Kraftstoffmenge verbraucht ist und gewisse, den Abbrand begünstigende Betriebsbedingungen vorliegen, wie beispielsweise eine Mindestabgastemperatur.

Aus der DE 34 20 199 A1 ist es bekannt, die Zugabe derartiger Additive zum Abbrennen von Rußpartikeln in einem Rußfilter in Abhängigkeit von von der Motordrehzaht abhängigen Druckverlustmerten im Abgasfilter zu regeln.

Der vorliegenden Erfindung liegt die Aufgabe zugrunde, ein Verfahren der obengenannten Art zur Verfügung zu stellen, bei dem eine bedarfsgerechte Dieselkraftstoffadditivierung als Regenerationshilfe für ein Partikelfilter erfolgt.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß ein Beladungszustand des Partikelfilters bestimmt wird und eine automatisierte Zugabe des Additives zum Kraftstoff nur dann erfolgt, wenn der Beladungszustand einen vorbestimmten Wert überschreitet.

Der Beladungszustand des Partikelfilters wird über eine Druckdifferenz in der Abgasnachbehandlungsanlage vor und nach dem Partikelfilter bestimmt. Ggf. wird hierbei zusätzlich ein Massenstrom, ein Abgasvolumenstrom und/oder eine Temperatur vor dem Partikelfilter berücksichtigt.

Zudem wird zusätzlich eine theoretische Partikelbeladung des Partikelfilters berechnet und aus dem Vergleich der theoretischen Partikelbeladung mit der aus der Druckdifferenz gemessenen Partikelbeladung der Beladungszustand des Partikelfilters ermittelt, wobei zum Berechnen der theoretischen Partikelbeladung eine Abgastemperatur abzüglich einer Bewertungsschwelle über eine vorbestimmte Zeit integriert wird. Um auch bei verschwefeltem Katalysator einen einwandfreien Betrieb zu gewährleisten ist die Bewertungsschwelle eine Temperatur oberhalb derer ein CRT-Verfahren, d.h. eine kontinuierliche Rußoxidation durch NO₂ bei bestimmten Temperatur und NOₓ/C-Verhältnissen, funktioniert.

Zur weiteren Optimierung bzw. soweit wie möglichen Reduzierung der automatischen Zugabe von Additiv wird die Menge des automatisiert zugegebenen Additives in Abhängigkeit von einer zuvor bestimmten Konzentration des Additives im Kraftstoff im Kraftstofftank bestimmt. Hierdurch kann beispielsweise bei bereits relativ hoher Additivkonzentration im Kraftstoff, welcher im Kraftstofftank vorhanden ist, die automatisch zugegebene Menge von Additiv entsprechend niedrig bleiben oder ggf. sogar vollständig unterbleiben, obwohl der vorbestimmte Beladungszustand des Partikelfilters überschritten ist.

In einer bevorzugten Weiterbildung der Erfindung wird eine Additivkonzentration in dem im Kraftstofftank gespeicherten Kraftstoff bestimmt und zusätzlich erfolgt auch dann eine automatisierte Zugabe des Additives zum Kraftstoff, wenn diese Additivkonzentration einen vorbestimmten Wert unterschreitet. Dies berücksichtigt Konzentrationsänderungen des Additives beispielsweise nach einem Nachtanken von Kraftstoff in den Kraftstofftank.

Optional wird die zusätzliche, automatisierte Zugabe des Additives zum Kraftstoff in Abhängigkeit von einer Additivkonzentration des Kraftstoffes im Kraftstofftank auch dann durchgeführt, wenn der Beladungszustand des Partikelfilters einen vorbestimmten Wert unterschreitet. Dies stellt, soweit gewünscht bzw. erforderlich, eine gewisse Grundkonzentration des Additives im Kraftstoff sicher.

In einer bevorzugten Ausführungsform umfaßt der Beladungszustand des Partikelfilters einen Wertebereich von 0% für Partikelfilter leer bis 100% für Partikelfilter voll, wobei der vorbestimmte Beladungszustand, ab dem Additiv automatisiert dem Kraftstoff zugegeben wird, einem Wert zwischen 70% bis 90%, insbesondere 80%, entspricht.

Beispielsweise wird das Additiv in einen Kraftstoffrücklauf, in einen rücklauffreien kleinen Kraftstoffkreislauf, in einen Kraftstoffvorlauf und/oder in den Kraftstofftank zugeführt.

Zum Initiieren einer Regeneration des Partikelfilters, d.h. einer Zündung und anschließenden Verbrennung von Rußpartikeln, wird eine Nacheinspritzung, eine Drosselklappe, eine Abgasrückführung und/oder ein Abgasturbolader des Dieselmotors entsprechend beeinflußt, so daß die Abgastemperatur steigt.

Zweckmäßigerweise wird zum automatisierten Zugeben des Additives in den Kraftstoff eine Dosierpumpe getaktet angesteuert, insbesondere mit einem Durchsatz von 0,35ml/1 Liter Diesel. Das Additiv ist beispielsweise gelöstes Ferrocen und der Partikelfilter ist beispielsweise ein Silizium-Karbid-Filter.

In einer weiteren Fortbildung der Erfindung wird aus dem Beladungszustand des Partikelfilters, einem Lambda-Wert und einer Temperatur vor dem Partikelfilter ermittelt, ob eine Verschwefelung vorliegt und falls ja eine Entschwefelungsmaßnahme initiiert.

Zweckmäßigerweise wird eine Menge der Zugabe des Additivs in Abhängigkeit von einem Kraftstoffverbrauch, von einem Rußkennfeld und/oder einem Füllstand des Dieselkraftstofftanks bestimmt.

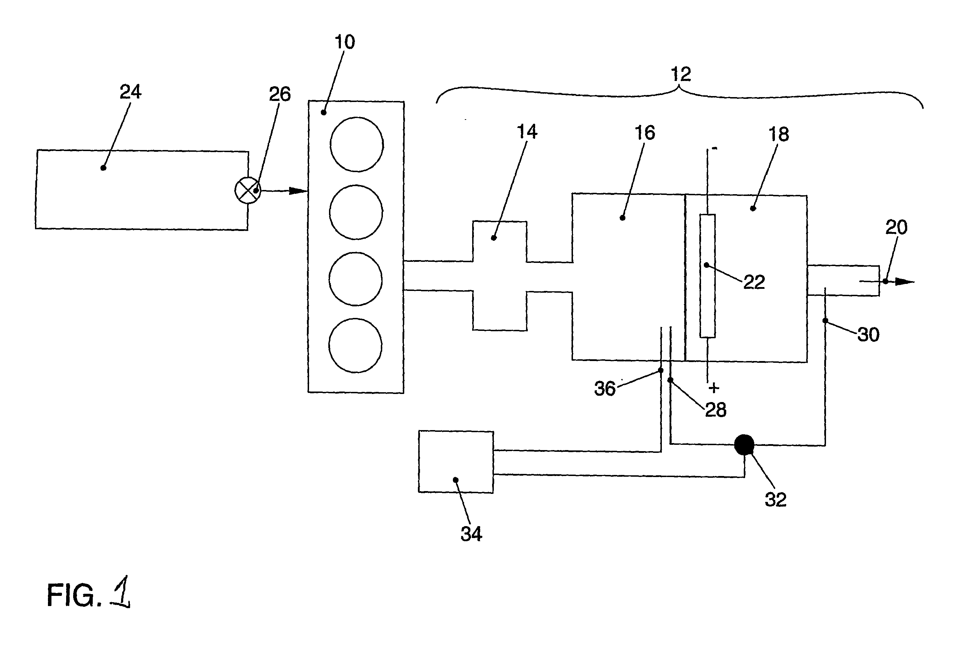

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. ein schematisches Funktionsschaltbild eines Dieselmotors.

Der in der einzigen Fig. schematisch dargestellte Dieselmotor umfaßt einen Motorblock 10 mit nicht dargestellter Kraftstoffversorgung sowie eine Abgasnachbehandlungsanlage 12 mit einem Oxidationskatalysator 14 zur Nachverbrennung von HC und CO, einem NO₂-Katatysator 16 für eine CRT-Funktion und einem Partikelfilter 18 zum Aufnehmen und verbrennen von Rußpartikeln aus dem Abgasstrom 20 des Dieselmotors. Der Ausdruck "CRT-Funktion" bezeichnet hierbei eine kontinuierliche Rußoxidation durch NO₂ bei bestimmten Temperatur- und NOₓ/C-Verhältnissen. Im Partikelfilter 18 ist eine externe Regenerationshilfe 22 für solche Betriebssituationen vorgesehen, in denen sich das Abgas in einem Niedertemperaturbereich befindet und trotzdem eine Regeneration erforderlich ist. Die Regenerationshilfe 22 ist beispielsweise als elektrisch betriebene Heizung ausgebildet.

Zusätzlich ist ein Additivtank 24 mit einer Dosierpumpe 26 vorgesehen und mit der Kraftstoffversorgung verbunden, um Additiv aus dem Additivtank 24 in den Kraftstoff zuzugeben. Das Additiv dient als Rußzündhilfe, um eine Zündtemperatur der Rußpartikel in dem Partikelfilter 18 von herkömmlich 600°C auf 450°C zu reduzieren.

Vor dem Partikelfilter 18 mißt ein erster Drucksensor 28 den Druck in der Abgasnachbehandlungsanlage 12 und ein zweiter Drucksensor 30 mißt den Druck in der Abgasnachbehandlungsanlage 12 nach dem Partikelfilter 18. Bei 32 liegt dann eine Druckdifferenz dp vor, die einem Auswerte- und Steuergerät 34 zugeführt wird. Zusätzlich wird mittels eines Temperatursensors 36 eine Temperatur in der Abgasnachbehandlungsanlage 12 vor dem Partikelfilter 18 gemessen. Auch dieser Wert wird dem Auswerte- und Steuergerät 34 zugeführt.

Das Auswerte- und Steuergerät 34 bestimmt aus dem Wert für die Temperatur in der Abgasnachbehandlungsanlage 12 vor dem Partikelfilter 18 und aus dem Wert für die Druckdifferenz dp 32 und ggf. zusätzlich aus einem Abgasvolumenstrom einen Beladungszustand des Partikelfilters 18. Ferner initiiert des Auswerte- und Steuergerät 34 eine temporäre, d.h. vorübergehende Zugabe von Additiv in bestimmten Betriebssituationen. Ausgehend von einem Beladungsmodell für den Partikelfilter 18 (0% = Partikelfilter leer, 100% = Partikelfilter voll) erfolgt die Dosierung des Additives aus dem Additivtank 24 beladungsabhängig. Bis zu einem bestimmten Beladungswert von beispielsweise 80% wird die Rußakkumulation im Partikelfilter 18 ohne Zugabe von Additiv zugelassen, d.h. das Auswerte- und Steuergerät 34 verhindert eine Additivzugabe aus dem Additivtank 24 in den Kraftstoff. Erst ab dem Schwellwert 80% wird von dem Auswerte- und Steuergerät 34 die Zugabe von Additiv in den Kraftstoff initiiert, wobei das Additiv zusammen mit den Rußpartikeln eine Zündfähige Schicht im Partikelfilter 18 ergibt. Als Trigger für den Dosierungsbeginn ist neben dem zuvor definierten Beladungswert auch die Erkennung einer erfolglosen Regeneration mit nichtadditiviertem Ruß (beispielsweise thermische Regeneration oder CRT-Verfahren) vorgesehen.

Die Menge der Zugabe wird in vorteilhafterweise in Abhängigkeit von einer im Kraftstoff bereits vorhandenen Konzentration des Additives bestimmt, so daß die zudosierte Additivmenge zusammen mit der bereits im Kraftstoff vorhandenen Additivmenge eine gewünschte Additivmenge bzw. Additivkonzentration im Kraftstoff ergibt. Mit anderen Worten wird wenig Additiv zudosiert, wenn bereits relativ viel Additiv im Kraftstoff vorhanden ist und umgekehrt viel Additiv zudosiert, wenn wenig Additiv im Kraftstoff vorhanden ist. Hierbei wird zweckmäßigerweise auch eine in einen Kraftstofftank zugetankte Kraftstoffmenge berücksichtigt, von der bekannt ist, daß sie kein derartiges Additiv enthält und somit eine Konzentration des Additivs im Kraftstoff im Kraftstofftank entsprechend reduziert. Hierzu werden jeweils getankte Kraftstoffmengen gemessen.

Die Menge der Zugabe des Additivs erfolgt bei Bedarf kraftstoffverbrauchsabhängig, in Abhängigkeit von einem Rußkennfeld und/oder in Abhängigkeit vom Füllstand direkt in den Dieselkraftstofftank. Die Additivzugabe erfolgt bevorzugt in einen rücklauffreien "kleinen" Kraftstoffkreislauf, vorzugsweise in den Kraftstoffvorlauf selbst. Beispielsweise mittels des Rußkennfeldes wird eine im jeweiligen Betriebszustand der Brennkraftmaschine abgegebene Rußmenge bestimmt und die Zugabemenge des Additives darauf abgestimmt.

Die Erhöhung der Abgastemperatur um eine Verbrennung der Rußpartikel und damit eine Regeneration des Partikelfilters 18 zu initiieren erfolgt durch Verstellung des Motors beispielsweise mittel einer entsprechenden Nacheinspritzung, einer Androsselung einer Beeinflussung einer Abgasrückführung und/oder einer Beeinflussung eines Abgasturboladers oder ähnliches.

## Patentansprüche

1. Verfahren zum Betreiben eines Dieselmotors, insbesondere eines Kraftfahrzeuges, mit einem Partikelfilter (18), welcher in einer Abgasnachbehandlungsanlage (12) des Dieselmotors angeordnet ist und Rußpartikel im Abgas des Dieselmotors aufnimmt, wobei dem Kraftstoff automatisiert ein Additiv zugegeben wird, welches eine Zündtemperatur von im Partikelfilter (18) abgelagerten Rußpartikeln reduziert, wobei ein Beladungszustand des Partikelfilters (18) bestimmt wird und eine automatisierte Zugabe des Additives zum Kraftstoff nur dann erfolgt, wenn der Beladungszustand einen vorbestimmten Wert überschreitet, **dadurch gekennzeichnet, dass** der Beladungszustand des Partikelfilters (18) über eine Druckdifferenz in der Abgasnachbehandlungsanlage (12) vor und nach dem Partikelfilter (18) bestimmt wird, wobei zusätzlich eine theoretische Partikelbeladung des Partikelfilters (18) berechnet und aus dem Vergleich der theoretischen Partikelbeladung mit der aus der Druckdifferenz gemessenen Partikelbeladung der Beladungszustand des Partikelfilters (18) ermittelt wird, wobei zum Berechnen der theoretischen Partikelbeladung eine Abgastemperatur abzüglich einer Bewertungsschwelle über eine vorbestimmte Zeit integriert wird.

2. Verfahren nach Anspruch 1, **dadurch gekennzeichnet, dass** der Beladungszustand zusätzlich unter Berücksichtigung eines Massenstroms, eines Abgasvolumenstroms und/oder einer Temperatur vor dem Partikelfilter (18) bestimmt wird.

3. Verfahren nach Anspruch 1 oder 2, **dadurch gekennzeichnet, dass** die Bewertungsschwelle eine Temperatur ist oberhalb derer ein CRT-System (12), d.h. eine kontinuierliche Rußoxidation durch N02 bei bestimmten Temperatur- und NOx/C-Verhältnissen, funktioniert.

4. Verfahren nach wenigstens einem der vorhergehenden Ansprüche, **dadurch gekennzeichnet, dass** die Menge des automatisiert zugegebenen Additives in Abhängigkeit von einer zuvor bestimmten Konzentration des Additives im Kraftstoff im Kraftstofftank bestimmt wird.

5. Verfahren nach wenigstens einem der vorhergehenden Ansprüche, **dadurch gekennzeichnet, dass** der Beladungszustand des Partikelfilters (18) einen Wertebereich von 0% für Partikelfilter (18) leer bis 100% für Partikelfilter (18) voll umfaßt, wobei der vorbestimmte Beladungszustand, ab dem Additiv automatisiert dem Kraftstoff zugegeben wird, einem Wert zwischen 70% bis 90%, insbesondere 80%, entspricht.

6. Verfahren nach wenigstens einem der vorhergehenden Ansprüche, **dadurch gekennzeichnet, dass** das Additiv in einen Kraftstoffrücklauf, einen rücklauffreien, kleinen Kraftstoffkreislauf, einen Kraftstoffvorlauf und/oder den Kraftstofftank zugeführt wird.

7. Verfahren nach wenigstens einem der vorhergehenden Ansprüche, **dadurch gekennzeichnet, dass** zum initiieren einer Regeneration des Partikelfilters (18), d.h. einer Zündung und anschließenden Verbrennung von Rußpartikeln, eine Nacheinspritzung, eine Drosselklappe, eine Abgasrückführung und/oder ein Abgasturbolader des Dieselmotors entsprechend beeinflußt wird, so daß die Abgastemperatur steigt.

8. Verfahren nach wenigstens einem der vorhergehenden Ansprüche, **dadurch gekennzeichnet, dass** zum automatisierten Zugeben des Additives in den Kraftstoff eine Dosierpumpe getaktet angesteuert wird, insbesondere mit einem Durchsatz von 0,35ml/1 Liter Diesel.

9. Verfahren nach wenigstens einem der vorhergehenden Ansprüche, **dadurch gekennzeichnet, dass** als Additiv gelöstes Ferrocen verwendet wird.

10. Verfahren nach wenigstens einem der vorhergehenden Ansprüche, **dadurch gekennzeichnet, dass** der Partikelfilter (18) ein Silizium-Karbid-Filter ist.

11. Verfahren nach wenigstens einem der vorhergehenden Ansprüche, **dadurch gekennzeichnet, dass** aus dem Beladungszustand des Partikelfilters (18), einem Lambda-Wert und einer Temperatur vor dem Partikelfilter (18) ermittelt wird, ob eine Verschwefelung vorliegt.

12. Verfahren nach Anspruch 11, **dadurch gekennzeichnet, dass** eine Entschwefelungsmaßnahme initiiert wird, wenn eine Verschwefelung vorliegt.

13. Verfahren nach einem der vorhergehenden Ansprüche, **dadurch gekennzeichnet, dass** eine Menge der Zugabe des Additivs in Abhängigkeit von einem Kraftstoffverbrauch, von einem Rußkennfeld und/oder einem Füllstand des Dieselkraftstofftanks bestimmt wird.

## Claims

1. Method for operating a diesel engine, in particular of a motor vehicle, having a particle filter (18) which is arranged in an exhaust-gas aftertreatment system (12) of the diesel engine and which collects soot particles in the exhaust gas of the diesel engine, with an additive being added to the fuel in an automated fashion, which additive reduces an ignition temperature of soot particles which have been deposited in the particle filter (18), with a loading state of the particle filter (18) being determined and with an automated addition of the additive to the fuel taking place only when the loading state exceeds a predetermined value, **characterized in that** the loading state of the particle filter (18) is determined by means of a pressure difference in the exhaust-gas aftertreatment system (12) upstream and downstream of the particle filter (18), with a theoretical particle loading of the particle filter (18) additionally being calculated, and with the loading state of the particle filter (18) being determined from the comparison of the theoretical particle loading with the particle loading measured from the pressure difference, wherein an exhaust-gas temperature minus an evaluation threshold is integrated over a predetermined time in order to calculate the theoretical particle loading.

2. Method according to Claim 1, **characterized in that** the loading state is additionally determined taking into consideration a mass flow, an exhaust-gas volume flow and/or a temperature upstream of the particle filter (18).

3. Method according to Claim 1 or 2, **characterized in that** the evaluation threshold is a temperature above which a CRT system (12), that is to say a continuous oxidation of soot by means of N02 at certain temperature and NOx/C ratios, is functional.

4. Method according to at least one of the preceding claims, **characterized in that** the quantity of the additive which is added in an automated fashion is determined as a function of a previously determined concentration of the additive in the fuel in the fuel tank.

5. Method according to at least one of the preceding claims, **characterized in that** the loading state of the particle filter (18) fully encompasses a value range from 0% for particle filter (18) empty to 100% for particle filter (18) full, with the predetermined loading state above which the additive is added to the fuel in an automated fashion corresponding to a value between 70% and 90%, in particular 80%.

6. Method according to at least one of the preceding claims, **characterized in that** the additive is supplied into a fuel return line, into a small fuel circuit which has no return line, into a fuel feed line and/or into the fuel tank.

7. Method according to at least one of the preceding claims, **characterized in that**, to initiate a regeneration of the particle filter (18), that is to say an ignition and subsequent combustion of soot particles, a post-injection, a throttle flap, a recirculation of exhaust gas and/or an exhaust-gas turbocharger of the diesel engine are/is correspondingly influenced in such a way that the exhaust-gas temperature is increased.

8. Method according to at least one of the preceding claims, **characterized in that**, for the automated addition of the additive into the fuel, a dosing pump is activated in a clocked fashion, in particular with a throughput of 0.35 ml/1 litre diesel.

9. Method according to at least one of the preceding claims, **characterized in that** dissolved ferrocene is used as additive.

10. Method according to at least one of the preceding claims, **characterized in that** the particle filter (18) is a silicone carbide filter.

11. Method according to at least one of the preceding claims, **characterized in that**, from the loading state of the particle filter (18), a lambda value and a temperature upstream of the particle filter (18), it is determined whether sulphurization has occurred.

12. Method according to Claim 11, **characterized in that** a desulphurization measure is initiated if sulphurization has occurred.

13. Method according to one of the preceding claims, **characterized in that** a quantity of the additive which is added is determined as a function of a fuel consumption, of a soot characteristic map and/or of a filling level of the diesel fuel tank.

## Revendications

1. Procédé permettant de faire fonctionner un moteur diesel, notamment de véhicule automobile, avec un filtre à particules (18) disposé dans une installation de post-traitement de gaz d'échappement (12) du moteur diesel et absorbant les particules de suie contenues dans le gaz d'échappement du moteur diesel, un additif étant automatiquement ajouté au carburant, ledit additif réduisant la température d'inflammation des particules de suie déposées dans le filtre à particules (18), un état de charge du filtre à particules (18) étant déterminé et un ajout automatique d'additif au carburant ne se produisant que lorsque l'état de charge dépasse une valeur prédéfinie, **caractérisé en ce que** l'état de charge du filtre à particules (18) est déterminé par l'intermédiaire d'une différence de pression observée dans l'installation de post-traitement de gaz d'échappement (12) avant et après le filtre à particules (18), une charge théorique des particules du filtre à particules (18) étant en outre calculée et l'état de charge du filtre à particules (18) étant en outre calculé à partir de la comparaison de la charge de particules théorique avec la charge des particules mesurée à partir de la différence de pression, une température des gaz d'échappement à laquelle on déduit un seuil d'évaluation étant intégrée pendant un temps prédéfini pour calculer la charge théorique des particules.

2. Procédé selon la revendication 1, **caractérisé en ce que** l'état de charge est déterminé en outre avant le filtre à particules (18) en tenant compte d'un débit massique, d'un débit volumique de gaz d'échappement et/ou d'une température.

3. Procédé selon la revendication 1 ou 2, **caractérisé en ce que** le seuil d'analyse est une température au-dessus de laquelle un système CRT (12) fonctionne, c'est-à-dire une oxydation continue de la suie par NO2 pour des rapports température et NOx/C définis.

4. Procédé selon au moins l'une quelconque des revendications précédentes, **caractérisé en ce que** la quantité d'additif ajoutée automatiquement est déterminée en fonction d'une concentration précédemment déterminée d'additif dans le carburant contenu dans le réservoir de carburant.

5. Procédé selon au moins l'une quelconque des revendications précédentes, **caractérisé en ce que** l'état de charge du filtre à particules (18) comprend une plage de valeurs de 0 % pour le filtre à particules (18) vide à 100 % pour le filtre à particules (18) plein, l'état de charge prédéfini à partir duquel de l'additif est ajouté automatiquement au carburant correspondant à une valeur comprise entre 70 % et 90 %, notamment 80 %.

6. Procédé selon au moins l'une quelconque des revendications précédentes, **caractérisé en ce que** l'additif est amené dans une conduite de retour de carburant, un petit circuit de carburant sans retour, une conduite d'amenée de carburant et/ou le réservoir de carburant.

7. Procédé selon au moins l'une quelconque des revendications précédentes, **caractérisé en ce qu'**une post-injection, un papillon, un guide de retour de gaz d'échappement et/ou un turbocompresseur de gaz d'échappement du moteur diesel sont influencés de façon correspondante pour lancer une régénération du filtre à particules (18), c'est-à-dire une inflammation puis une combustion des particules de suie, de façon à faire monter la température du gaz d'échappement.

8. Procédé selon au moins l'une quelconque des revendications précédentes, **caractérisé en ce que** l'ajout automatisé de l'additif dans le carburant est commandé de façon cadencée à l'aide d'une pompe de dosage, notamment avec un débit de 0,35ml/1 par litre de diesel.

9. Procédé selon au moins l'une quelconque des revendications précédentes, **caractérisé en ce que** du ferrocène dissous est utilisé comme additif.

10. Procédé selon au moins l'une quelconque des revendications précédentes, **caractérisé en ce que** le filtre à particules (18) est un filtre de carbure de silicium.

11. Procédé selon au moins l'une quelconque des revendications précédentes, **caractérisé en ce qu'**on calcule à partir de l'état de charge du filtre à particules (18), d'une valeur lambda et d'une température mesurée avant le filtre à particules (18) s'il y a sulfurisation.

12. Procédé selon la revendication 11, **caractérisé en ce qu'**une mesure de désulfurisation est lancée en cas de désulfurisation.

13. Procédé selon au moins l'une quelconque des revendications précédentes, **caractérisé en ce qu'**une quantité d'ajout d'additif est déterminée en fonction de la consommation de carburant, des caractéristiques de la suie et/ou du niveau de remplissage du réservoir de carburant diesel.
